# EUROPEAN PATENT SPECIFICATION

(11) **EP 4 147 554 B1**
(45) Date of publication and mention of the grant of the patent: **21.01.2026**
(21) Application number: 22195479.5
(22) Date of filing: 13.09.2022
(51) Int. Cl.: A01B 79/00, A01M 7/00, A01C 21/00

(54) **SYSTEM AND METHOD FOR TRACKING FARMING TREATMENTS**
SYSTEM UND VERFAHREN ZUR VERFOLGUNG VON LANDWIRTSCHAFTLICHEN BEHANDLUNGEN
SYSTEME ET PROCEDE DE SUIVI DES TRAITEMENTS AGRICOLES

(30) Priority: 13.09.2021 IT 202100023534
(43) Date of publication of application: 15.03.2023
(73) Proprietor: Precision Farming Network S.r.l., 37051 Bovolone (VR) (IT)
(72) Inventor: CAFFINI, Gerardo, 37050 Palù (VR) (IT)
(74) Representative: Caldon, Giuliano

(56) References cited:
- EP-A1- 1 269 819
- WO-A1-01/16661
- WO-A1-2020/239772
- FR-A1- 2 922 716
- US-A1- 2020 113 169

## Description

### Field of application

The present invention regards a system and a method for tracking farming treatments.

The system and the present method are inserted in the farming field and in particular in the context of the industrial field of production of farming machines and/or of accessories for farming machines.

In particular, the present system and method are intended to be applied to machines (carried, towed or self-propelled) adapted to execute a treatment on farming ground or on cultivations, such as sowing, the distribution of fertilizer, the spraying of water or phytosanitary products, the disinfestation of cultivations, etc.

### State of the art

There is increasing need in the agricultural field to ensure the user can receive food products with certified trackability of the various treatments to which the cultivations and the products were subjected during the entire production chain.

In particular, it is particularly important to ensure that the terrain and cultivations were subjected to suitable treatments and operations, for example with regard to the sowing operations, the fertilization of the ground, the spraying of water or phytosanitary products, the disinfestation of cultivations, etc.

For such purpose, for some time farming machines have been introduced on the market which allow determining the quantity of product (e.g. seeds, fertilizers, phytosanitary products) to be distributed on the ground cultivated as a function of specific characteristics of the soil and environment.

In particular, the aforesaid farming machines are provided with a control unit, which is adapted to command in an automated manner the distributor members of the machine (such as the distribution members of a seeder or of a fertilizer spread, the nozzles of a spraying machine, etc.).

In addition, the control unit is connected to a command panel of the farming machine, through which the operator can set the doses of product to be dispensed.

In particular, it is known to load specific prescription maps in the control unit for the specific farming ground to be treated. Such prescription maps contain information that allow the control unit to command the dispensing of the product on the ground as a function of the specific zones on which the machine is operating, in a manner such to plan the treatment executed by the machine.

The data relative to the products employed in the planned treatments are reported in suitable treatments notebooks, in order to allow the verification thereof.

For example, the patent application US 2020/0113169 A1 describes a farming machine whose control unit is provided with a processor which is connected to a GPS receiver and to a touch screen of a user interface, as well as to a first register containing GPS information obtained during the sowing of the plantations and to a second register which contains parameters on the quantity of product to be distributed based on the sowing information. The processor processes the data contained in the two aforesaid registers in order to generate the instructions that are stored in a third register and are sent to the distributor members of the machine as a function of the current position supplied by the GPS receiver.

The patent application WO 01/16661 A1 describes a spraying machine of known type, whose control unit acquires data relative to the product actually dispensed (e.g. by means of a flowmeter associated with the nozzles) and sends this data to a remote base computer that stores it in a data memory so as to be able to execute diagnostics operations and remote assistance in case of machine failure.

The abovementioned solutions of known type nevertheless do not allow reliably ensuring that the planned specifications of the treatments are those actually carried out, in particular in relation to the type of product employed and to the quantities actually distributed on the ground.

For example, if the operator, for any reason, interrupts the dispensing of the product or modifies the dispensing parameters from the command panel, or loads a product on the machine that is different from the expected product, it is not possible to detect the discrepancy with respect to the planned treatment and that actually carried out and, in particular, it is not possible to indicate the correct information on the trackability certificates of the food products introduced on the market.

In addition, the creation of data archives for tracking requires manually executing long and numerous operations.

There is therefore the need to optimize the pre-existing apparatuses so to be able to supply reliable data relative to the treatments actually executed on the ground and on the cultivations.

### Presentation of the invention

The main object of the present invention is therefore that of overcoming the drawbacks manifested by the solutions of known type, by providing a system and a method for tracking farming treatments which allow reliably ensuring the treatments executed during the entire production chain of the food products, and in particular the actual use of the farm products used.

Another object of the present invention is to provide a system and a method for tracking farming treatments which allow obtaining, in an easy and automated manner, the certifications on the farm products.

Another object of the present invention is to provide a system and a method for tracking farming treatments which allow acquiring, in a simple and quick manner, the data relative to the treatments used for producing a food product.

Another object of the present invention is to provide a system for tracking farming treatments that is inexpensive to attain.

### Brief description of the drawings

The technical characteristics of the invention, according to the aforesaid objects, can be clearly seen in the contents of the below-reported claims and the advantages of the same will be more evident from the following detailed description, made with reference to the enclosed drawings, which represent a merely exemplifying and non-limiting embodiment of the invention, in which:
- figure 1 shows a representative diagram of the system for tracking farming treatments, object of the present invention;
- figure 2 shows a block diagram relative to several components of the present system associated with on-board electronics of a farming machine of the system itself.

### Detailed description of a preferred embodiment

With reference to the enclosed drawings, reference number 1 overall indicates the system for tracking farming treatments, object of the present invention.

Such system 1 is adapted to be advantageously employed for detecting products actually distributed during farming treatments (such as sowing, fertilization, irrigation, disinfestation, etc.) and rendering the acquired information usable in a reliable manner in order to certify the food products supplied to consumers.

The present system 1 comprises one or more farming machines 2 arranged for executing specific treatments, such as sowing machines, fertilizer spread machines, spraying machines, etc.

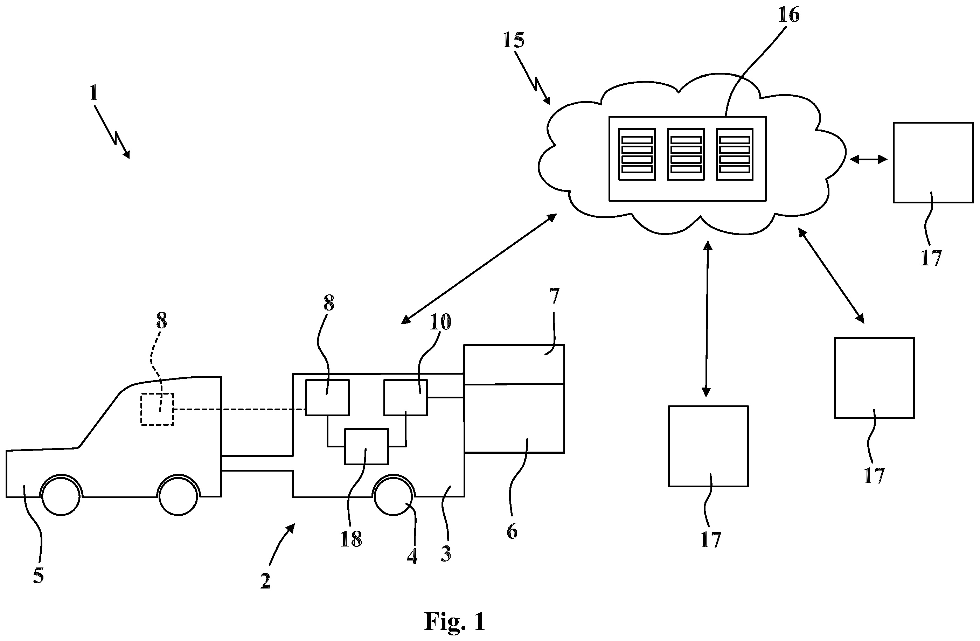

With reference to the diagram of figure 1, the farming machine 2 comprises a support framework 3 arranged for advancing on the ground and, for such purpose, advantageously provided with two or more wheels 4 or tracks.

The farming machine 2 can be of towed type, and hence intended to be connected to a tractor 5 in order to advance on the ground, or of self-propelled type, or of carried type, and hence intended to be connected to the lifting system of the tractor 5, in a manner per se known in the state of the art.

On the support framework 3 of the farming machine 2, at least one distribution device 6 is mounted which is arranged for distributing at least one product on the ground or on the cultivations.

Advantageously, the farming machine 2 comprises at least one tank 7 (such as a cistern, a hopper, a containment tub) intended to contain the product to be distributed and connected to the distribution device 6 in order to supply the product to the latter.

The distribution device 6 (and the relative product) are selected and arranged as a function of the specific farming machine 2 adapted to execute the corresponding treatment.

For example, in the case of a spraying machine, the distribution device 6 generally comprises multiple sprayer nozzles with one or more pumps arranged for distributing liquid products on cultivations during the operations of spraying, fertilization, disinfestation, etc. of the cultivations. The liquid products used are usually obtained with aqueous solutions containing chemical products (e.g. phytosanitary products) diluted in concentrations that vary depending on the type of cultivation to be treated.

In the event in which the farming machine 2 is a seeder machine, the distribution device 6 comprises a metering device connected to an overlying hopper containing the seeds to be distributed on the ground.

In the event in which the farming machine 2 is a fertilizer spreader machine, the distribution device comprises dispenser nozzles with one or more pumps (in the case of liquid or semi-liquid fertilizers) or one or more metering devices (e.g. with blades and/or opening discs) connected to a hopper (in the case of granular or powder fertilizers).

Of course, the farming machine 2 can also be of type different that of the above-indicated examples.

The farming machines 2 and the relative distribution devices 6 are well known in the reference field and therefore will not be further described hereinbelow.

The farming machine 2 comprises a user interface device 8 provided with at least one transmission port 9 in order to exchange command signals and data signals with a control unit 10 (as described hereinbelow).

In particular, the user interface device 8 is arranged for allowing an operator to introduce commands for actuating the operation of the farming machine 2 and setting operating parameters thereof, which are transmitted to the control unit 10 by means of corresponding command signals.

The user interface device 8 is advantageously arranged for showing the operator information relative to the state of operation of the farming machine 2.

For example, the user interface device 8 can comprise a display screen or visual indicators, and/or command components, possibly integrated in a touch screen or constituted by push-button panels or physical levers.

Advantageously, the user interface device 8 can be mounted on the farming machine 2 or, in the case of towed machine, can be mounted on the tractor 5 and possibly integrated in a control panel of the latter.

As mentioned above, the farming machine 2 comprises a control unit 10, which is mounted on the support framework 3 and is operatively connected to the user interface device 8 and to the distribution device 6.

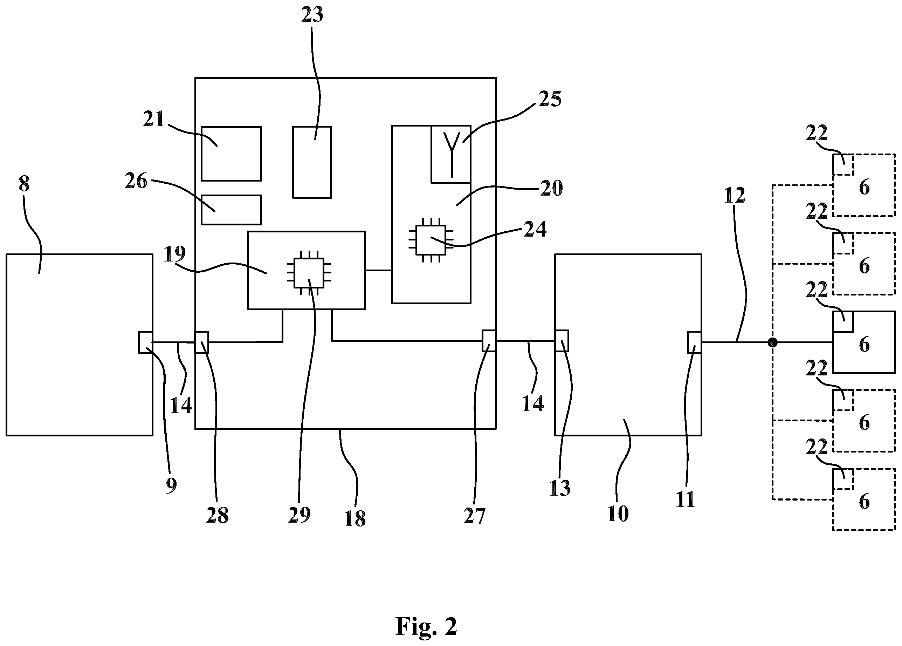

More in detail, with reference to the diagram of figure 2, the control unit 10 is provided with at least one first communication port 11 which is in data communication, by means of a communication line 12, with the distribution device 6 in order to send, to the latter, control signals adapted to command the operation of the distribution device 6 itself.

In addition, by means of the aforesaid communication line 12, the control unit 10 is adapted to receive, from the distribution device 6, data signals containing operating parameters associated with the distribution device 6 itself.

In particular, the aforesaid operating parameters comprise dispensing parameters (relative to the quantity of the distributed product, to the distribution rate, to the quantity of product that remained in the tank 7, etc.), position parameters (relative to the geolocation of the farming machine 2), operation parameters (relative to the operation conditions of the distribution device 6), diagnostics parameters, etc.

In addition, the control unit 10 is provided with at least one second communication port 13, which is in data communication, by means of a transmission line 14, with the user interface device 8 in order to receive the command signals relative to the operation of the distribution device 6 and which determine the control signals that the control unit 10 sends to the latter.

In addition, by means of the aforesaid transmission line 14, the control unit 10 is adapted to send to the user interface device 8 at least some of the aforesaid data signals containing the operating parameters of the farming machine 2, so as to allow the user interface device 8 to supply the operator with signals indicative of predetermined such operating parameters.

Advantageously, the control unit 10 is arranged for communicating with the user interface device 8 and/or with the distribution device 6 by means of serial transmission, for example with ISOBUS protocol.

Suitably, the control unit 10 is of electronic type and is preferably provided with an electronic processor for managing the signals that it receives and transmits, in a manner per se known and hence not discussed in detail hereinbelow.

With reference to the diagram of figure 1, the present system 1 comprises a remote computer apparatus 15, which is in data communication (in particular by means of wireless communication) with the farming machine 2 in order to receive specific information from the latter, as described in detail hereinbelow. In particular, the remote computer apparatus 15 is provided with at least one electronic register 16 in which the aforesaid information is stored.

Advantageously, the aforesaid remote computer apparatus 15 is implemented by means of one or more servers, in particular by means of cloud computing, and allows providing the information of the electronic register 16 to a plurality of users 17 by means of Internet network, through electronic devices (such as computers, tablets, smartphones, etc.) connected online.

Advantageously, the remote computer apparatus 15 implements one or more web platforms, through which the users 17 can access the electronic register 16.

In accordance with the idea underlying the present invention, the farming machine 2 of the present system 1 comprises an electronic detection unit 18, which is mounted on the support framework 3 of the farming machine 2 and is arranged for acquiring the data signals transmitted by the control unit 10 so as to extrapolate and send, to the remote computer apparatus 15, operating parameters of interest, in particular relative to the dispensing parameters of the products distributed by the farming machine 2.

More in detail, with reference to the diagram of figure 2, the aforesaid electronic detection unit 18 comprises a recording module 19, which is placed to intercept the transmission line 14 between the second communication port 13 of the control unit 10 and the transmission port 9 of the user interface device 8 in order to intercept the data signals that traverse the transmission line 14.

The recording module 19 is arranged for selecting, from among the operating parameters of the data signals, at least one group of dispensing parameters indicative of the quantity of product distributed by the distribution device 6.

In addition, the electronic detection unit 18 comprises a communication module 20 of wireless type, which is operatively connected to the recording module 19 and is in data communication with the remote computer apparatus 15 in order to send to the latter communication signals containing the aforesaid dispensing parameters. As discussed below, the communication module 20 sends, by means of the communication signals, data packs containing the dispensing parameters and, advantageously, further operating parameters of interest.

The remote computer apparatus 15 is arranged for storing the dispensing parameters in its electronic register 16 so as to allow the users to access the information relative to such parameters.

Advantageously, the electronic register 16 of the remote computer apparatus 15 comprises, for each treatment recorded by the electronic detection unit 18 of the farming machine 2, a register file having multiple fields containing corresponding operating parameters send to the remote computer apparatus 15 itself.

In particular, the fields can contain corresponding data relative to the dispensing parameters, position parameters, operation parameters, and advantageously other parameters such as the identification of the farming machine 2, the identification of the operator, the identification of the treated ground, etc.

Preferably, the electronic detection unit 18 comprises one or more electronic processors with specific implementation programs. In particular, the implementation programs allow, by means of a suitable user interface, to set, in a suitable identification field, a specific identification code which allows uniquely associating the electronic detection unit 18 with the farming machine 2 on which it is mounted. For example, the aforesaid identification code can be constituted by the serial number of the farming machine 2.

Advantageously, the electronic detection unit 18 associates such identification code with the recorded operating parameters and sends it, together with the latter, to the remote computer apparatus 15, in a manner such that it is inserted in the corresponding register file of the electronic register 16.

Advantageously, the electronic detection unit 18 is connected to a geolocation device 21 (such as a GPS device) adapted to provide position parameters constituted by geolocation measurements of the farming machine 2. In particular, the aforesaid geolocation device 21 can be a component of the farming machine 2 (preferably integrated in the electronic detection unit 18) or it can be a component of the tractor 5.

The electronic detection unit 18 associates position parameters with the corresponding dispensing parameters in corresponding data packs that the communication module 20 is adapted to send, contained in the communication signals, to the remote computer apparatus 15.

In this manner, the information relative to the dispensed product (contained in the dispensing parameters) are associated with the position of the farming machine 2 when the distribution device 6 dispenses the product, allowing the identification of the quantity of product distributed in each specific zone of the treated ground.

Advantageously, the distribution device 6 comprises at least one sensor 22 arranged for detecting measurements indicative of the quantity of dispensed product.

For example, the aforesaid sensor 22 can be a flowmeter (in particular in the case of liquid products), or a load cell associated with the tank 7 of the farming machine 2 (in particular in the case of granular or powder products), or a count photocell (in particular in the case of granular products such as the seeds of the cultivations), etc.

Suitably, the sensor 22 is arranged for detecting measurements indicative of the weight of dispensed product or of the dispensing rate, or of the number of elements of the distributed product (for example counting the number of distributed seeds, in the case of sowing machines).

The sensor 22 is arranged for sending, to the control unit 10, data signals containing dispensing parameters corresponding to the aforesaid measurements, which, subsequently, are acquired by the electronic detection unit 18 when they are transmitted through the transmission line 14.

Advantageously, the recording module 19 is programmed for calculating the speed at which the farming machine 2 proceeds (for example by means of the information supplied by the geolocation device 21 or by means of an accelerometer 23 of the electronic detection unit 18), in particular such to be able to calculate the quantity of product dispensed per unit of ground surface.

Advantageously, as stated above, the control unit 10 is arranged for communicating with the user interface device 8 by means of serial transmission.

In such serial transmission, in the data signals transmitted by the control unit 10, each dispensing parameter is contained in a corresponding bit information pack containing an identification code associated with such dispensing parameter.

The recording module 19 is arranged for identifying, in the information bit packs of the data signals, the aforesaid identification codes associated with the dispensing parameters and to acquire the information bit packs containing such identification codes.

Such information bit packs are inserted in the data packs of the communication signals sent by the communication module 20 to the remote computer apparatus 15.

In this manner, the electronic detection unit 18 is capable of selecting, from all the data signals transmitted by the control unit 10, the data of interest to be sent to the remote computer apparatus 15. This allows, in particular, considerably reducing the weight of the data transmitted by the communication module 20, with consequent simplification of the interfaces of the remote computer apparatus 15 and of the communication module 20 itself.

Advantageously, the recording module is also arranged for recording operation parameters contained in the data signals which the control unit 10 receives from the distribution device 6 and which are transmitted in the transmission line 14. Such operation parameters, in particular, can be indicative of the activation state of the distribution device 6. For example, in the case of multiple distribution devices 6 (e.g. multiple dispensing nozzles), the operation parameters can indicate which distribution devices 6 are active and which are turned off.

Preferably, the recording module 19 is also arranged for recording control parameters contained in the command signals that the user interface device 8 sends to the control unit 10 by means of the transmission line 14. Such control parameters can correspond, for example, to setting instructions supplied by the user interface device 8 to the control unit 10 for the operation of the distribution device 6.

Advantageously, the communication module is a IOT device and, therefore, is adapted to communicate with the remote computer apparatus 15 by means of Internet connection.

Preferably, the communication module 20 comprises a first processor 24 provided with one or more input/output ports for communicating with the recording module 19, and at least one wireless transceiving block 25 (e.g. with radio transmitter, Wi-Fi module, SIM card) connected to the first processor 24 and arranged for communicating with the remote computer apparatus 15.

Advantageously, the electronic detection unit 18 comprises a data buffer 26 adapted to store, for at least one specific time period, the dispensing parameters (and in particular the data packs) to be sent to the remote computer apparatus 15.

In particular, the communication module 20 is arranged for detecting possible periods of Internet network signal absence, and in such periods the electronic detection unit 18 (in particular the communication module 20) is arranged for storing the data packs (derived from the data acquired from the recording module 19) in the data buffer 26 and, upon re-establishing the connection with the Internet network, to send the data packs to the remote computer apparatus 15.

In this manner, in case of absence of signal of Internet network, the electronic detection unit 18 can temporarily store the data packs in the data buffer 26 and, when the line returns, the communication module 20 can restart the transmission of such data packs to the remote computer apparatus 15.

The electronic register 16 of the remote computer apparatus 15 is implemented with a data structure of blockchain type. In this manner, the data inserted in the electronic register 16 cannot be altered, thus representing a formal declaration of the information contained relative to the farming treatment.

Advantageously, the electronic detection unit 18 is placed to intercept the transmission line 14 in series between the control unit 10 and the user interface device 8. In particular, the electronic detection unit 18 is provided with a first connector 27, which is connected to the transmission line 14 in order to be connected with the control unit 10, and a second connector 28, which is connected to the transmission line 14 in order to be connected with the user interface device 8.

Suitably, the transmission line 14 is a CAN line and the first and the second connector 27, 28 of the electronic detection unit 18 are also of corresponding CAN type.

Advantageously, the recording module 19 is provided with a second processor 29 provided with input/output ports in order to communicate with the first connector 27 (connected to the control unit 10) and preferably with the second connector 28 connected to the user interface device 8. In addition, the second processor 29 is connected to the first processor 24 of the communication module 20 for the transmission of the data packs to the remote computer apparatus 15.

In accordance with a particular embodiment of the present invention, the recording module 19 and the communication module 20 are obtained with two separate hardware devices (provided with corresponding processors 24, 29) that are connected together, for example placed in a same housing or in separate housings. Otherwise, the recording 19 and communication 20 modules are integrated in a same hardware, e.g. with processor and a common Flash memory partitioned in order to execute the operations of both modules 19, 20.

Advantageously, the electronic detection unit 18 is placed outside the control unit 10 and, in particular, is operatively connected to the latter (e.g. via cable) through the transmission line 14.

Advantageously, the electronic detection unit 18 comprises a containment body which at its interior houses the recording module 19 and the communication module 20 and, preferably, the geolocation device 21 and/or the accelerometer 23 and/or the data buffer 26.

Advantageously, the electronic detection unit 18 is rigidly fixed to the support framework 3 of the farming machine 2 and, in particular, its containment body is fixed with sealing to the support framework 3 (e.g. by means of one or more sealing welds), so as to be able to ascertain possible tampering of the electronic detection unit 18.

Also constituting the object of the present invention is a method for tracking farming treatments implemented by means of the abovementioned system 1, regarding which the reference numbers will be maintained for the sake of description simplicity.

The present method comprises a starting step, in which an operator, by means of the user interface device 8 of the farming machine 2, introduces a work start command.

Advantageously, in such starting step, an operation is provided for identifying the product used in the treatment. For example, such operation can be executed by the operator by inserting the identification data of the product (for example reported in the package of the latter) in the user interface device 8, by means of which such data is transmitted to the electronic detection unit 18 and, then, transmitted to the data packs sent to the remote computer apparatus 15. Otherwise, such operation can be executed by means of an electronic device (such as a smartphone provided with application interfaced with the user interface device 8, with the electronic detection unit 18 or with the portal of the remote computer apparatus 15) which detects, for example by means of optical reading of the QR code on the product package, the data relative to the latter and transmits it to the user interface device 8, to the electronic detection unit 18 or to the remote computer apparatus 15.

Optionally, in the starting step, the operator can register further data, such as an identification code of the operator (e.g. by means of badge) or the selection of an already-planned treatment activity.

A loading step is provided for, in which the product to be distributed is loaded into the farming machine 2 (in particular in the tank 7). The introduced quantity can be measured by means of suitable sensors of the distribution device 6 and the corresponding measurement signals sent to the control unit 10 and then received by the electronic detection unit 18 in order to send them to the remote computer apparatus 15.

The present method then provides for a distribution step, in which the operator commands the farming machine 2 to advance on the ground and distribute the product by means of the distribution device 6.

In such distribution step, the control unit 10 receives the data signals from the distribution device 6 and transmits the latter through the transmission line 14 to which the electronic detection unit 18 is connected.

During the distribution step, a recording step is provided for in which, the recording module 19 of the electronic detection unit 18 acquires the data signals transmitted by the control unit 10 in the transmission line 14, and selects, between the operating parameters of such data signals, at least one group of dispensing parameters indicative of the quantity of product distributed by the distribution device 6, in accordance with that described above.

A communication step is provided for, in which the communication module 20 of the electronic detection unit 18 sends communication signals containing the aforesaid dispensing parameters to the remote computer apparatus 15.

Advantageously, such communication step is executed in real time during the distribution step. For example, the communication module 20 can send the communication signals at regular time intervals, e.g. every five seconds. In accordance with a different embodiment of the present method, the communication step is executed at the end of the distribution step.

Advantageously, during the distribution step, the geolocation device 21 supplies the electronic detection unit with position parameters constituted by geolocation measurements indicative of the position of the farming machine 2 during the distribution of the product.

The electronic detection unit 18 associates the position parameters with the corresponding dispensing parameters in corresponding information packs which, during the communication step, the communication module 20 sends in the communication signals to the remote computer apparatus 15.

In this manner, it is possible to detect, for each specific area of the ground, the corresponding quantity of distributed product.

Advantageously, during the recording step, the recording module 19 records state parameters, relative to the operation state of the distribution device during the distribution step (as discussed above). Such state parameters are stored in the aforesaid data packs sent by the communication module 20 to the remote computer apparatus 15.

The method also provides for a work conclusion step, in which, at the end of the distribution step, the operator introduces a work end command. In particular, such conclusion step can occur by means of a command actuated by the operator through the user interface device 8 or another electronic device in communication with the latter or with the electronic detection unit 18 (such as smartphones, tablets, etc. through specific software application), or even automatically, for example following the turning off of the farming machine 2.

An archiving step is provided for, in which the remote computer apparatus 15 stores the dispensing parameters in the electronic register 16. In particular, such archiving step can occur at the end of the recording and communication step, or it can occur simultaneously with the latter by executing a periodic update of the electronic register 16.

Advantageously, in the archiving step, the remote computer apparatus 15 inserts the information packs (received by the electronic detection unit 18 of the farming machine 2) in the electronic register 16, in particular inserting each parameter or data in the corresponding field.

Optionally, the present method comprises a planning step, in which the user, before the work starting step, can communicate to the remote computer apparatus 15 some data relative to the treatment that one intends to carry out, which the farming machine 2 will be employed (serial number), the field that will be treated, the type of product employed, the quantity of product that one intends to distribute. Such planning step can be executed, advantageously, by means of an electronic device connected to the remote computer apparatus 15, such as for example a smartphone or a computer provided with suitable interface application or connected to a suitable web portal of the remote computer apparatus 15.

Following the execution of the treatment, and hence of the above-described operating steps, the data registered in the planning step is updated or associated (in suitable fields) with the data supplied by the electronic detection unit 18 of the farming machine 2.

The invention thus described therefore attains the pre-established objects.

In particular, the system 1 and the present method allow a purchaser of a food product to acquire data relative to the products used during the farming treatments for producing such product. For example, it is possible, by means of the remote computer apparatus 15, to implement an application for smartphone capable of recognizing a QR code on the package of the product which allows accessing the electronic register 16 of the remote computer apparatus 15.

In particular, it is possible to receive information regarding the type of treatment executed, the model of farming machine used, the dilution of the product used, the operator who executed the treatment, etc. In addition, it is possible to acquire telemetry data relative to the position of the farming machine and consequently the path completed and the treated area, the dispensed product quantity, the product remaining (calculated based on the collected data), date and time of the treatment (in particular, start and end of treatment and consequently the duration thereof).

Advantageously, the system 1 and the present method allow processing the acquired data in order to compile, in an automated manner, a Treatment Notebook and a Farmland Notebook, authenticating the data produced by the control unit of the farming machine, sending the collected data to a certified central database, directly usable by affected subjects such as GDO, public administration or other.

The data acquired by the remote computer apparatus 15 is inserted in the aforesaid electronic register 16 implemented with a blockchain structure, which therefore cannot be altered. Therefore, when an accredited authority carries out the controls, for example on the total quantities of a specific product used, these must be coherent with the quantities of product acquired and those in the warehouse, since the data on the acquired quantities of dispensed product in the electronic register 16 cannot be modified.

Advantageously, the system 1 and the present method allow substituting the operations that are currently performed in a completely manual manner, i.e. the paper certifications generally compiled at the end of the year. In particular the present system allows automatically generating the certificates in real time and substitutes the signature that the farmer generally affixes on the certificates that he must produce at the end of the year. In such a manner, the automatic generation of a valid certification pursuant to law for each treatment and the acquisition in real time of authenticated data on a database simplify the farmer work management and control operations.

## Claims

1. System (1) for tracking farming treatments, which comprises:
- a farming machine (2) comprising:
- a support framework (3) arranged for advancing on the ground;
- at least one distribution device (6) mounted on said support framework (3) and arranged for distributing at least one product on the ground or on the cultivations;
- a user interface device (8) provided with at least one transmission port (9) in order to exchange command signals and data signals;
- a control unit (10), which is mounted on said support framework (3) and is provided with
• at least one first communication port (11), which is in data communication, by means of a communication line (12), with said at least one distribution device (6) in order to send control signals to said distribution device (6) adapted to command the operation of said distribution device (6) and in order to receive, from said distribution device (6), data signals containing operating parameters associated with said distribution device (6),
• at least one second communication port (13), which is in data communication, by means of a transmission line (14), with said user interface device (8) in order to receive said command signals and send said data signals to said user interface device (8);
- at least one remote computer apparatus (15), which is in data communication with said farming machine (2) and is provided with at least one electronic register (16);
said system (1) being **characterized in that** said farming machine (2) comprises an electronic detection unit (18), which comprises:
- a recording module (19), which is placed to intercept said transmission line (14) between the second communication port (13) of said control unit (10) and the transmission port (9) of said user interface device (8) in order to intercept said data signals, and is arranged for selecting, from among the operating parameters of said data signals, at least one group of dispensing parameters indicative of the quantity of product distributed by said distribution device (6);
- a communication module (20) of wireless type, which is operatively connected to said recording module (19) and is in data communication with said remote computer apparatus (15) in order to send communication signals containing said dispensing parameters to said remote computer apparatus (15), which is arranged for storing said dispensing parameters in said electronic register (16);
wherein said electronic register (16) is implemented with a data structure of blockchain type.

2. System (1) according to claim 1, **characterized in that** said distribution device (6) comprises at least one sensor (22) arranged for detecting measurements indicative of the quantity of product dispensed by said distribution device (6), and arranged for sending, to said control unit (10), said data signals containing dispensing parameters corresponding to said measurements.

3. System (1) according to claim 1 or 2, **characterized in that** said electronic detection unit (18) is connected to a geolocation device (21) adapted to provide position parameters indicative of geolocation measurements of said farming machine (2);
wherein said electronic detection unit (18) associates said position parameters with corresponding said dispensing parameters in corresponding information packs which said communication module (20) is adapted to send, contained in said communication signals, to said remote computer apparatus (15).

4. System (1) according to any one of the preceding claims, **characterized in that** said communication module (20) is a IOT device in communication with said remote computer apparatus (15) by means of Internet connection.

5. System (1) according to any one of the preceding claims, **characterized in that** said electronic detection unit (18) comprises a data buffer (26) adapted to store, for at least one specific time period, at least said dispensing parameters.

6. System (1) according to any one of the preceding claims, **characterized in that** said control unit (10) is arranged for communicating with said user interface device (8) by means of serial transmission;
wherein, in said data signals, each said dispensing parameter is contained in a bit information packet containing an identification code associated with said dispensing parameter;
wherein said recording module (19) is arranged for identifying, in said data signals, said identification codes associated with said dispensing parameters and to acquire the information packs containing said identification codes.

7. Method for tracking farming treatments implemented by means of a system (1) comprising:
- a farming machine (2) comprising:
- a support framework (3) arranged for advancing on the ground;
- at least one distribution device (6) mounted on said support framework (3) and arranged for distributing at least one product on the ground or on the cultivations;
- a user interface device (8) provided with at least one transmission port (9) in order to exchange command signals and data signals;
- a control unit (10), which is mounted on said support framework (3) and is provided with
• at least one first communication port (11), which is in data communication, by means of a communication line (12), with said at least one distribution device (6),
• at least one second communication port (13), which is in data communication, by means of a transmission line (14), with said user interface device (8);
- an electronic detection unit (18), which comprises:
• a recording module (19), which is placed to intercept said transmission line (14) between the second communication port (13) of said control unit (10) and the transmission port (9) of said user interface device (8);
• a communication module (20) of wireless type, which is operatively connected to said recording module (19);
- at least one remote computer apparatus (15), which is in data communication with said farming machine (2) and is provided with at least one electronic register (16);
said method comprising:
- a starting step, wherein an operator, by means of said user interface device (8), introduces a work start command;
- a step of loading at least one product in said farming machine (2);
- a distribution step, wherein said operator commands said farming machine (2) to advance on the ground and to distribute said product by means of said distribution device (6); in said distribution step, said control unit (10) sends control signals to said distribution device (6) adapted to command the operation of said distribution device (6), receives from said distribution device (6) data signals containing operating parameters associated with said distribution device (6), and transmits said data signals through said transmission line (14);
- a recording step, wherein, at least during said distribution step, the recording module (19) of said electronic detection unit (18) acquires said data signals transmitted by said control unit (10) in said transmission line (14), and selects, from among the operating parameters of said data signals, at least one group of dispensing parameters indicative of the quantity of product distributed by said distribution device (6);
- a communication step, wherein said communication module (20) sends, to said remote computer apparatus (15), communication signals containing said dispensing parameters,
- a work conclusion step, wherein, at the end of said distribution step, said operator introduces an end work command;
- an archiving step, wherein the remote computer apparatus (15) stores said dispensing parameters in said electronic register (16), wherein said electronic register (16) is implemented with a data structure of blockchain type.

8. Method for tracking farming treatments according to claim 7, wherein said electronic detection unit (18) is connected to a geolocation device (21),
**characterized in that** said geolocation device (21) provides position parameters indicative of geolocation measurements of said farming machine (2), and said electronic detection unit (18) associates said position parameters with said corresponding dispensing parameters in corresponding information packs which said communication module (20) sends, in said communication signals, to said remote computer apparatus (15), which inserts said information packs into said electronic register (16).

## Patentansprüche

1. System (1) zur Verfolgung von landwirtschaftlichen Behandlungen, das Folgendes umfasst:
- eine Landmaschine (2), umfassend:
- ein Tragegestell (3), das dazu eingerichtet ist, sich auf dem Boden vorwärts zu bewegen;
- mindestens eine Verteilervorrichtung (6), die auf dem genannten Tragegestell (3) montiert und zum Verteilen mindestens eines Produkts auf dem Boden oder den Kulturen vorgesehen ist;
- eine Benutzerschnittstellenvorrichtung (8), die mit mindestens einem Übertragungsanschluss (9) versehen ist, um Befehlssignale und Datensignale auszutauschen;
- eine Steuereinheit (10), die auf dem genannten Tragegestell (3) montiert und ausgestattet ist mit
• mindestens einem ersten Kommunikationsanschluss (11), der mittels einer Kommunikationsleitung (12) in Datenkommunikation mit der genannten mindestens einen Verteilervorrichtung (6) steht, um Steuersignale an die genannte Verteilervorrichtung (6) zu senden, die geeignet sind, den Betrieb der genannten Verteilervorrichtung (6) zu steuern, und um von der genannten Verteilervorrichtung (6) mit der genannten Verteilervorrichtung (6) verknüpfte Betriebsparameter enthaltende Datensignale zu empfangen,
• mindestens einem zweiten Kommunikationsanschluss (13), der mittels einer Übertragungsleitung (14) mit der genannten Benutzerschnittstellenvorrichtung (8) in Datenkommunikation steht, um die genannten Befehlssignale zu empfangen und die genannten Datensignale an die genannte Benutzerschnittstellenvorrichtung (8) zu senden;
- mindestens einem Remote-Computer-Gerät (15), das in Datenkommunikation mit der genannten Landmaschine (2) steht und mit mindestens einem elektronischen Register (16) ausgestattet ist;
wobei das genannte System (1) **dadurch gekennzeichnet ist, dass** die genannte Landmaschine (2) eine elektronische Erfassungseinheit (18) enthält, die Folgendes umfasst:
- ein Aufzeichnungsmodul (19), das dazu eingerichtet ist, die genannte Übertragungsleitung (14) zwischen dem zweiten Kommunikationsanschluss (13) der genannten Steuereinheit (10) und dem Übertragungsanschluss (9) der genannten Benutzerschnittstellenvorrichtung (8) zu erfassen, um die genannten Datensignale zu erfassen, und dazu vorgesehen ist, aus den Betriebsparametern der genannten Datensignale mindestens eine Gruppe von Abgabeparametern auszuwählen, die die Menge des von der genannten Verteilungsvorrichtung (6) verteilten Produkts angeben;
- ein Kommunikationsmodul (20) drahtlosen Typs, das operativ mit dem genannten Aufzeichnungsmodul (19) verbunden ist und in Datenkommunikation mit dem genannten Remote-Computer-Gerät (15) steht, um die genannten Abgabeparameter enthaltende Kommunikationssignale an das genannte Remote-Computer-Gerät (15) zu senden, das zum Speichern der genannten Abgabeparameter in dem genannten elektronischen Register (16) vorgesehen ist;
wobei das genannte elektronische Register (16) mit einer Datenstruktur vom Typ Blockchain implementiert ist.

2. System (1) nach Anspruch 1, **dadurch gekennzeichnet, dass** die genannte Verteilervorrichtung (6) mindestens einen Sensor (22) umfasst, der dazu vorgesehen ist, Messungen, die die Menge des von der genannten Verteilervorrichtung (6) ausgegebenen Produkts angeben, zu erfassen und dazu vorgesehen ist, die genannten Datensignale, die den genannten Messungen entsprechende Ausgabeparameter enthalten, an die genannte Steuereinheit (10) zu senden.

3. System (1) nach Anspruch 1 oder 2, **dadurch gekennzeichnet, dass** die genannte elektronische Erfassungseinheit (18) an eine Geolokalisierungsvorrichtung (21) angeschlossen ist, die geeignet ist, Positionsparameter zur Verfügung zu stellen, die Geolokalisierungsmessungen der genannten Landmaschine (2) angeben;
wobei die genannte elektronische Erfassungseinheit (18) die genannten Positionsparameter mit entsprechenden genannten Abgabeparametern in entsprechenden Informationspaketen verknüpft, die das genannte Kommunikationsmodul (20) geeignet ist, in den genannten Kommunikationssignalen enthalten, an das genannte Remote-Computer-Gerät (15) zu senden.

4. System (1) nach einem beliebigen der vorangegangenen Ansprüche, **dadurch gekennzeichnet, dass** das genannte Kommunikationsmodul (20) ein IoT-Gerät ist, das mittels einer Internetverbindung mit dem genannten Remote-Computer-Gerät (15) kommuniziert.

5. System (1) nach einem beliebigen der vorangegangenen Ansprüche, **dadurch gekennzeichnet, dass** die genannte elektronische Erfassungseinheit (18) einen Datenpuffer (26) umfasst, der geeignet ist, mindestens für einen bestimmten Zeitraum mindestens die genannten Abgabeparameter zu speichern.

6. System (1) nach einem beliebigen der vorangegangenen Ansprüche, **dadurch gekennzeichnet, dass** die genannte Steuereinheit (10) zum Kommunizieren mit der genannten Benutzerschnittstellenvorrichtung (8) mittels serieller Übertragung vorgesehen ist;
wobei in den genannten Datensignalen jeder der genannten Abgabeparameter in einem Bit-Informationspaket enthalten ist, das einen mit dem genannten Abgabeparameter verknüpften Identifikationscode enthält;
wobei das genannte Aufzeichnungsmodul (19) dazu vorgesehen ist, in den genannten Datensignalen die mit den genannten Abgabeparametern verknüpften Identifikationscodes festzustellen und die die genannten Identifikationscodes enthaltenden Informationspakete zu erfassen.

7. Verfahren zur Verfolgung von landwirtschaftlichen Behandlungen, das mit Hilfe eines Systems (1) implementiert wird, das Folgendes umfasst:
- eine Landmaschine (2), umfassend:
- ein Tragegestell (3), das dazu eingerichtet ist, sich auf dem Boden vorwärts zu bewegen;
- mindestens eine Verteilervorrichtung (6), die auf dem genannten Tragegestell (3) montiert und für die Verteilung mindestens eines Produkts auf dem Boden oder den Kulturen vorgesehen ist;
- eine Benutzerschnittstellenvorrichtung (8), die mit mindestens einem Übertragungsanschluss (9) versehen ist, um Befehlssignale und Datensignale auszutauschen;
- eine Steuereinheit (10), die auf dem genannten Tragegestell (3) montiert und ausgestattet ist mit
• mindestens einem ersten Kommunikationsanschluss (11), der mittels einer Kommunikationsleitung (12) mit der genannten mindestens einen Verteilungsvorrichtung (6) in Datenkommunikation steht,
• mindestens einem zweiten Kommunikationsanschluss (13), der mittels einer Übertragungsleitung (14) mit der genannten Benutzerschnittstellenvorrichtung (8) in Datenkommunikation steht;
- einer elektronischen Erfassungseinheit (18), die Folgendes umfasst:
- ein Aufzeichnungsmodul (19), das dazu eingerichtet ist, die genannte Übertragungsleitung (14) zwischen dem zweiten Kommunikationsanschluss (13) der genannten Steuereinheit (10) und dem Übertragungsanschluss (9) der genannten Benutzerschnittstellenvorrichtung (8) zu erfassen;
- ein Kommunikationsmodul (20) drahtlosen Typs, das operativ mit dem genannten Aufzeichnungsmodul (19) verbunden ist;
- mindestens ein Remote-Computer-Gerät (15), das in Datenkommunikation mit der genannten Landmaschine (2) steht und mit mindestens einem elektronischen Register (16) ausgestattet ist;
wobei das genannte Verfahren Folgendes umfasst:
- einen Startschritt, bei dem ein Bediener mittels der genannten Benutzerschnittstellenvorrichtung (8) einen Arbeitsstartbefehl erteilt;
- einen Schritt zum Laden mindestens eines Produkts in die genannte Landmaschine (2);
- einen Verteilungsschritt, bei dem der genannte Bediener der genannten Landmaschine (2) befielt, sich auf dem Boden vorwärts zu bewegen und das genannte Produkt mittels der genannten Verteilungsvorrichtung (6) zu verteilen; wobei bei dem genannten Verteilungsschritt die genannte Steuereinheit (10) Steuersignale an die genannte Verteilungsvorrichtung (6) sendet, die geeignet sind, den Betrieb der genannten Verteilungsvorrichtung (6) zu steuern, von der genannten Verteilungsvorrichtung (6) Datensignale empfängt, die mit der genannten Verteilungsvorrichtung (6) verknüpfte Betriebsparameter enthalten, und die genannten Datensignale über die genannte Übertragungsleitung (14) überträgt;
- einen Aufzeichnungsschritt, bei dem mindestens während des genannten Verteilungsschritts das Aufzeichnungsmodul (19) der genannten elektronischen Erfassungseinheit (18) die von der genannten Steuereinheit (10) in der genannten Übertragungsleitung (14) übertragenen genannten Datensignale erfasst und aus den Betriebsparametern der genannten Datensignale mindestens eine Gruppe von Abgabeparametern auswählt, die die Menge des von der genannten Verteilungsvorrichtung (6) verteilten Produkts angeben;
- einen Kommunikationsschritt, bei dem das genannte Kommunikationsmodul (20) an das genannte Remote-Computer-Gerät (15) Kommunikationssignale sendet, die die genannten Abgabeparameter enthalten,
- einen Arbeitsabschlussschritt, bei dem der genannte Bediener am Ende des genannten Verteilungsschritts einen Arbeitsendebefehl erteilt;
- einen Archivierungsschritt, bei dem das genannte Remote-Computer-Gerät (15) die genannten Abgabeparameter in dem genannten elektronischen Register (16) speichert, wobei das genannte elektronische Register (16) mit einer Datenstruktur vom Typ Blockchain implementiert wird.

8. Verfahren zur Verfolgung von landwirtschaftlichen Behandlungen nach Anspruch 7, wobei die genannte elektronische Erfassungseinheit (18) an eine Geolokalisierungsvorrichtung (21) angeschlossen ist, **dadurch gekennzeichnet, dass** die genannte Geolokalisierungsvorrichtung (21) Positionsparameter bereitstellt, die Geolokalisierungsmessungen der genannten Landmaschine (2) angeben, und dass die genannte elektronische Erfassungseinheit (18) die genannten Positionsparameter mit den genannten entsprechenden Abgabeparametern in entsprechenden Informationspaketen verknüpft, die das genannte Kommunikationsmodul (20), in den genannten Kommunikationssignalen, an das genannte Remote-Computer-Gerät (15) sendet, das die genannten Informationspakete in das genannte elektronische Register (16) einfügt.

## Revendications

1. Système (1) de suivi des traitements agricoles, comprenant :
- une machine agricole (2) comprenant :
- un cadre de support (3) agencé pour avancer sur le sol ;
- au moins un dispositif de distribution (6) monté sur ledit cadre de support (3) et agencé pour distribuer au moins un produit sur le sol ou sur les cultures ;
- un dispositif d'interface utilisateur (8) pourvu d'au moins un port de transmission (9) afin d'échanger des signaux de commande et des signaux de données ;
- une unité de commande (10), qui est montée sur ledit cadre de support (3) et est pourvue de
• au moins un premier port de communication (11), qui est en communication de données, au moyen d'une ligne de communication (12), avec ledit au moins un dispositif de distribution (6) afin d'envoyer des signaux de commande audit dispositif de distribution (6) apte à commander le fonctionnement dudit dispositif de distribution (6) et afin de recevoir, dudit dispositif de distribution (6), des signaux de données contenant des paramètres opérationnels associés audit dispositif de distribution (6),
• au moins un second port de communication (13), qui est en communication de données, au moyen d'une ligne de transmission (14), avec ledit dispositif d'interface utilisateur (8) afin de recevoir lesdits signaux de commande et d'envoyer lesdits signaux de données audit dispositif d'interface utilisateur (8) ;
- au moins un appareil informatique distant (15), qui est en communication de données avec ladite machine agricole (2) et qui est pourvu d'au moins un registre électronique (16) ;
ledit système (1) étant **caractérisé en ce que** ladite machine agricole (2) comprend une unité de détection électronique (18), qui comprend :
- un module d'enregistrement (19), qui est placé pour intercepter ladite ligne de transmission (14) entre le second port de communication (13) de ladite unité de commande (10) et le port de transmission (9) dudit dispositif d'interface utilisateur (8) afin d'intercepter lesdits signaux de données, et qui est agencé pour sélectionner, parmi les paramètres opérationnels desdits signaux de données, au moins un groupe de paramètres de dosage indicatifs de la quantité de produit distribué par ledit dispositif de distribution (6) ;
- un module de communication (20) de type sans fil, qui est relié de manière opérationnelle audit module d'enregistrement (19) et qui est en communication de données avec ledit appareil informatique distant (15) afin d'envoyer des signaux de communication contenant lesdits paramètres de dosage audit appareil informatique distant (15), qui est agencé pour stocker lesdits paramètres de dosage dans ledit registre électronique (16) ;
où ledit registre électronique (16) est mis en œuvre avec une structure de données de type blockchain.

2. Système (1) selon la revendication 1, **caractérisé en ce que** ledit dispositif de distribution (6) comprend au moins un capteur (22) agencé pour détecter des mesures indicatives de la quantité de produit délivré par ledit dispositif de distribution (6), et agencé pour envoyer, à ladite unité de commande (10), lesdits signaux de données contenant des paramètres de dosage correspondant auxdites mesures.

3. Système (1) selon la revendication 1 ou 2, **caractérisé en ce que** ladite unité de détection électronique (18) est reliée à un dispositif de géolocalisation (21) apte à fournir des paramètres de position indicatifs de mesures de géolocalisation de ladite machine agricole (2) ;
où ladite unité de détection électronique (18) associe lesdits paramètres de position auxdits paramètres de dosage correspondants dans des paquets d'informations correspondants que ledit module de communication (20) est apte à envoyer, contenus dans lesdits signaux de communication, audit appareil informatique distant (15).

4. Système (1) selon l'une quelconque des revendications précédentes, **caractérisé en ce que** ledit module de communication (20) est un dispositif IdC en communication avec ledit appareil informatique distant (15) au moyen d'une connexion Internet.

5. Système (1) selon l'une quelconque des revendications précédentes, **caractérisé en ce que** ladite unité de détection électronique (18) comprend un tampon de données (26) apte à stocker, pendant au moins une période de temps spécifique, au moins lesdits paramètres de dosage.

6. Système (1) selon l'une quelconque des revendications précédentes, **caractérisé en ce que** ladite unité de commande (10) est agencé pour communiquer avec ledit dispositif d'interface utilisateur (8) au moyen d'une transmission en série ;
où, dans lesdits signaux de données, chaque paramètre de dosage est contenu dans un paquet d'informations binaires contenant un code d'identification associé audit paramètre de dosage ;
où ledit module d'enregistrement (19) est agencé pour identifier, dans lesdits signaux de données, lesdits codes d'identification associés aux paramètres de dosage et pour acquérir les paquets d'informations contenant lesdits codes d'identification.

7. Procédé de suivi des traitements agricoles mis en œuvre au moyen d'un système (1) comprenant :
- une machine agricole (2) comprenant :
- un cadre de support (3) agencé pour avancer sur le sol ;
- au moins un dispositif de distribution (6) monté sur ledit cadre de support (3) et agencé pour distribuer au moins un produit sur le sol ou sur les cultures ;
- un dispositif d'interface utilisateur (8) pourvu d'au moins un port de transmission (9) afin d'échanger des signaux de commande et des signaux de données ;
- une unité de commande (10), qui est montée sur ledit cadre de support (3) et est pourvue de
• au moins un premier port de communication (11), qui est en communication de données, au moyen d'une ligne de communication (12), avec ledit au moins un dispositif de distribution (6),
• au moins un second port de communication (13), qui est en communication de données, au moyen d'une ligne de transmission (14), avec ledit dispositif d'interface utilisateur (8) ;
- une unité de détection électronique (18), qui comprend :
• un module d'enregistrement (19), qui est placé pour intercepter ladite ligne de transmission (14) entre le second port de communication (13) de ladite unité de commande (10) et le port de transmission (9) dudit dispositif d'interface utilisateur (8) ;
• un module de communication (20) de type sans fil, qui est relié de manière opérationnelle audit module d'enregistrement (19) ;
- au moins un appareil informatique distant (15), qui est en communication de données avec ladite machine agricole (2) et qui est pourvu d'au moins un registre électronique (16) ;
ledit procédé comprenant :
- une étape de démarrage, où un opérateur, au moyen dudit dispositif d'interface utilisateur (8), introduit une commande de démarrage de travail ;
- une étape de chargement d'au moins un produit dans ladite machine agricole (2) ;
- une étape de distribution, où ledit opérateur commande à ladite machine agricole (2) d'avancer sur le sol et de distribuer ledit produit au moyen dudit dispositif de distribution (6) ; dans ladite étape de distribution, ladite unité de commande (10) envoie des signaux de commande audit dispositif de distribution (6) aptes à commander le fonctionnement dudit dispositif de distribution (6), reçoit dudit dispositif de distribution (6) des signaux de données contenant des paramètres opérationnels associés audit dispositif de distribution (6), et transmet lesdits signaux de données par l'intermédiaire de ladite ligne de transmission (14) ;
- une étape d'enregistrement, où, au moins pendant ladite étape de distribution, le module d'enregistrement (19) de ladite unité de détection électronique (18) acquiert lesdits signaux de données transmis par ladite unité de commande (10) dans ladite ligne de transmission (14), et sélectionne, parmi les paramètres opérationnels desdits signaux de données, au moins un groupe de paramètres de dosage indicatifs de la quantité de produit distribuée par ledit dispositif de distribution (6) ;
- une étape de communication, où ledit module de communication (20) envoie, audit appareil informatique distant (15), des signaux de communication contenant lesdits paramètres de dosage,
- une étape de conclusion du travail, où, à la fin de ladite étape de distribution, ledit opérateur introduit une commande de fin de travail ;
- une étape d'archivage, où l'appareil informatique distant (15) stocke lesdits paramètres de dosage dans ledit registre électronique (16), ledit registre électronique (16) étant mis en œuvre avec une structure de données de type blockchain.

8. Procédé de suivi des traitements agricoles selon la revendication 7, où ladite unité de détection électronique (18) est reliée à un dispositif de géolocalisation (21), **caractérisé en ce que** ledit dispositif de géolocalisation (21) fournit des paramètres de position indicatifs de mesures de géolocalisation de ladite machine agricole (2), et ladite unité de détection électronique (18) associe lesdits paramètres de position auxdits paramètres de dosage correspondants dans des paquets d'informations correspondants que ledit module de communication (20) envoie, dans lesdits signaux de communication, audit appareil informatique distant (15), qui insère lesdits paquets d'informations dans ledit registre électronique (16).
